# EUROPEAN PATENT APPLICATION

(11) **EP 4 607 774 A1**
(43) Date of publication of application: **27.08.2025**
(21) Application number: 23939807.6
(22) Date of filing: 28.12.2023
(51) Int. Cl.: H02K 7/08, H02K 5/16

(54) **MOTOR DEVICE**

(30) Priority: 31.05.2023 JP 2023090374
(71) Applicant: Mitsuba Corporation, Kiryu-shi Gunma 376-8555 (JP)
(72) Inventor: JO, Yutaro, Kiryu-shi, Gunma 376-8555 (JP); YOSHIDA, Yasushi, Kiryu-shi, Gunma 376-8555 (JP); BUSUJIMA, Junichi, Kiryu-shi, Gunma 376-8555 (JP); HOSHINO, Terumasa, Kiryu-shi, Gunma 376-8555 (JP); YAMAMOTO, Daiki, Kiryu-shi, Gunma 376-8555 (JP)
(74) Representative: Winter, Brandl - Partnerschaft mbB
(86) International application number: PCT/JP2023/047267
(87) International publication number: WO 2024/247341

(57) **Abstract**

Provided is a motor device capable of reducing the number of components and being easily assembled. The present invention comprises: a motor case 31 to which a stator 32 is fixed; a housing 41 against which the motor case 31 is butted; a rotary shaft 34 which is housed inside the motor case 31 and the housing 41; a first metal BR1 which is provided in the motor case 31 and supports the axial-direction base side of the rotary shaft 34; a second metal BR2 which is provided in the housing 41 and supports the axial-direction tip side of the rotary shaft 34; a ball bearing 36 which is provided between the first metal BR1 and the second metal BR2 in the axial direction of the rotary shaft 34 and supports the rotary shaft 34; and a holder member 38 which is positioned on the ball bearing 36 and holds a plurality of conductive members 39. The holder member 38 is sandwiched between the motor case 31 and the ball bearing 36.

## Description

### Technical Field

The invention relates to a motor device including a stator and a rotor that rotates relative to the stator.

### Related Art

For example, Patent Document 1 discloses a sunroof motor including a motor part and a gear part. A first radial bearing is provided in a yoke forming the motor part and a second radial bearing provided at a brush holder mounted on the opening part of the yoke. In addition, an armature shaft is rotatably supported by the first and second radial bearings.

Meanwhile, a third radial bearing and a ball bearing (bearing) are mounted on a gear case forming the gear part, and a worm shaft is rotatably supported by the third radial bearing and the ball bearing. Between the armature shaft and the worm shaft, a linking member is provided to link the armature shaft and the worm shaft and be able to transmit power.

### [Prior Art Document(s)]

### [Patent Document(s)]

Patent Document 1: Japanese Patent Application Laid-open No. 2019-129566

### SUMMARY OF INVENTION

### Technical Problem

However, in the technique disclosed in Patent Document 1, the armature shaft is supported by a pair of bearings provided at the yoke, the worm shaft is supported by a pair of bearings provided at the gear case, and the armature shaft and the worm shaft are linked to each other by the linking member. However, in addition to having a large number of parts, the motor part and the gear part need to be assembled by being accurately disposed on the same axis, respectively, and the assembly work is troublesome.

An objective of the invention is to provide a motor device able to be easily assembled and have a reduced number of parts.

### [Means for solving the issues]

According to an aspect of the invention a motor device has a stator; and a rotor, rotating with respect to the stator. The motor device includes: a first case, in which the stator is fixed inside; a second case, abutting against the first case in an axial direction of the rotor; a rotation shaft, provided at the rotor and rotatably accommodated inside the first case and the second case; a first bearing, provided at the first case and rotatably supporting a base end side of the rotation shaft in an axial direction; a second bearing, provided at the second case and rotatably supporting a tip side of the rotation shaft in the axial direction; a third bearing, provided between the first bearing and the second bearing in the axial direction of the rotation shaft and rotatably supporting the rotation shaft; and a holder member, positioned by the third bearing and holding a plurality of conductive members. The holder member is sandwiched between the first case and the third bearing in the axial direction of the rotor.

### [Effects of Invention]

According to the invention, a motor device able to be easily assembled and have a reduced number of parts.

### BRIEF DESCRIPTION OF DRAWINGS

[FIG. 1] FIG. 1 is a schematic view of a sunroof device disposed on a roof of a vehicle.
[FIG. 2] FIG. 2 is a perspective view showing an output gear side of a sunroof motor.
[FIG. 3] FIG. 3 is a perspective view showing a cover member side of the sunroof motor.
[FIG. 4] FIG. 4 is a cross-sectional view of the sunroof motor along an axial direction of a rotation shaft.
[FIG. 5] FIG. 5 is a perspective view of a rotor as seen from a worm side.
[FIG. 6] FIG. 6 is a perspective view of the holder member as seen from the side of a deceleration mechanism part.
[FIG. 7] FIG. 7 is an arrow sign view of FIG. 6.
[FIG. 8] FIG. 8 is a cross-sectional view illustrating a first positioning part.
[FIG. 9] FIG. 9 is a cross-sectional view illustrating a second positioning part.
[FIG. 10] FIG. 10 is a cross-sectional view illustrating a third positioning part.
[FIG. 11] FIG. 11 is a view describing an assembly procedure (1) of a sunroof motor.
[FIG. 12] FIG. 12 is a view describing an assembly procedure (2) of a sunroof motor.

### DESCRIPTION OF EMBODIMENTS

The following describes an embodiment of the invention in detail using the drawings.

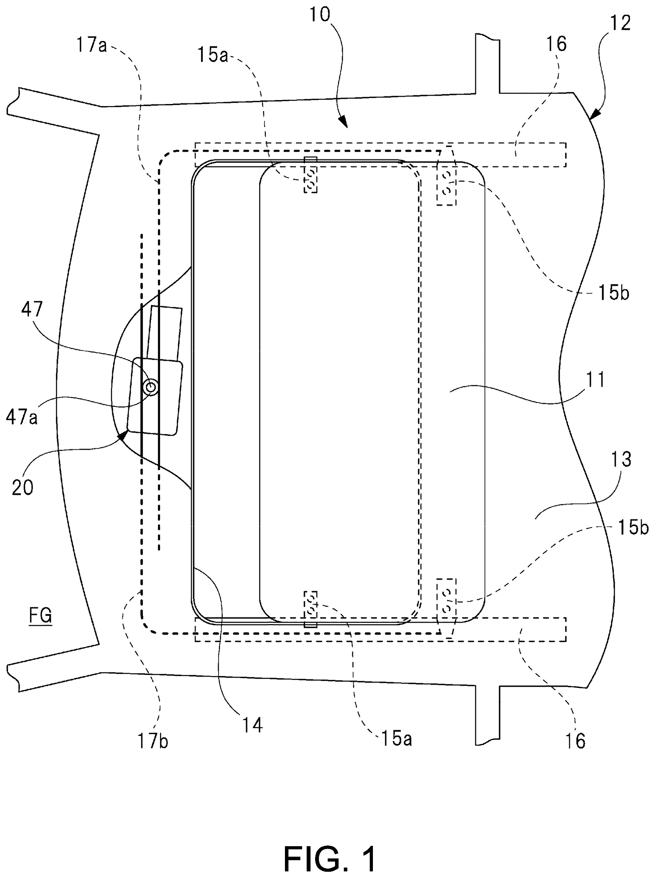

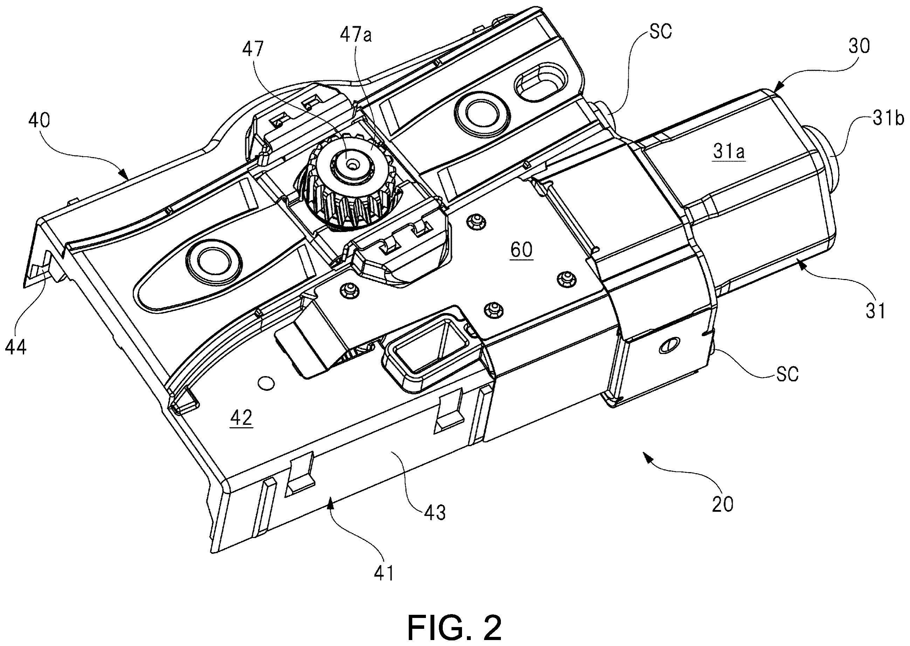

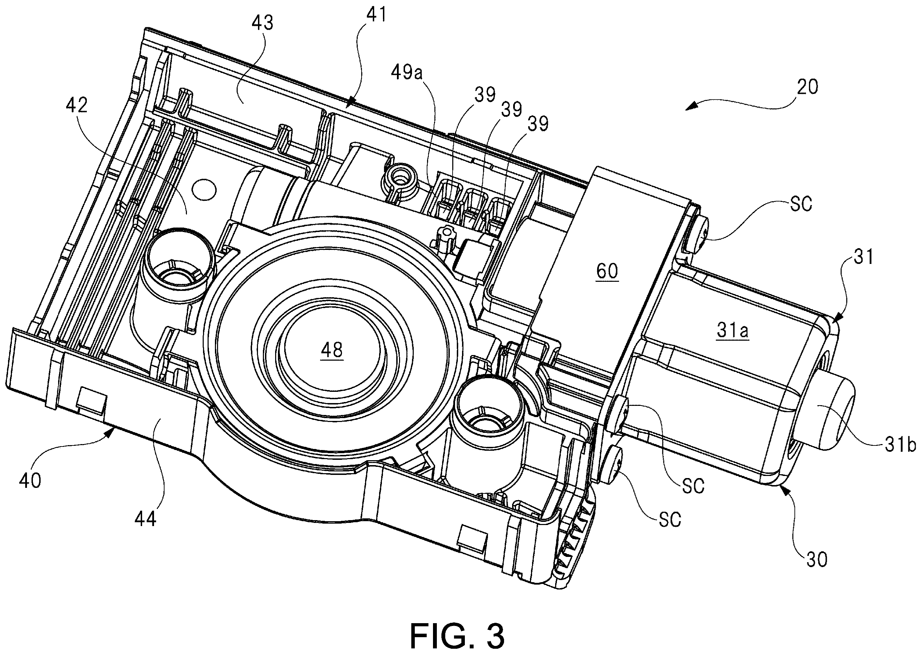

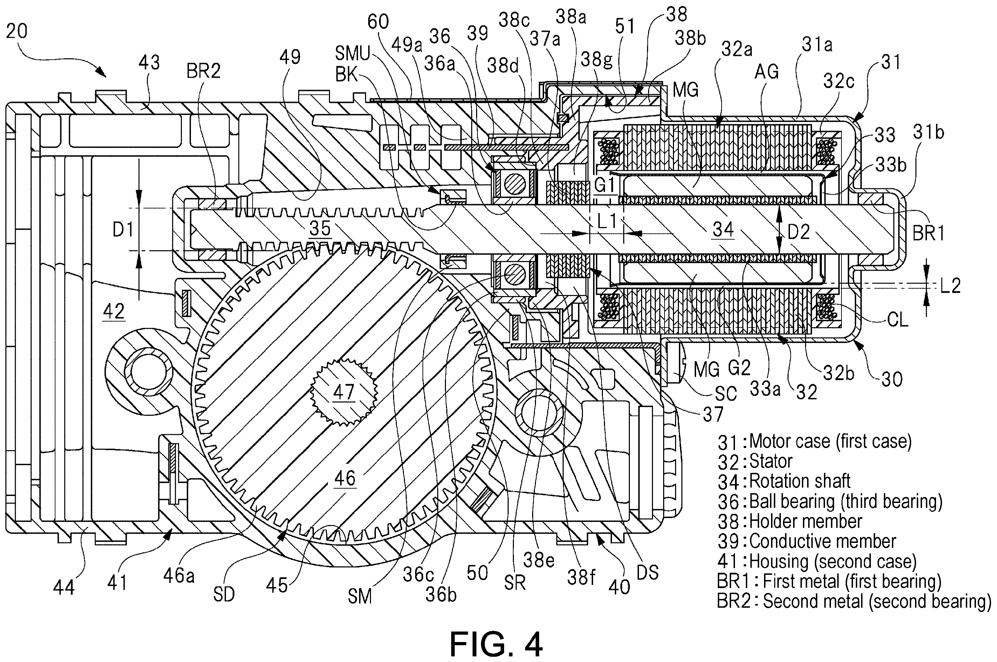

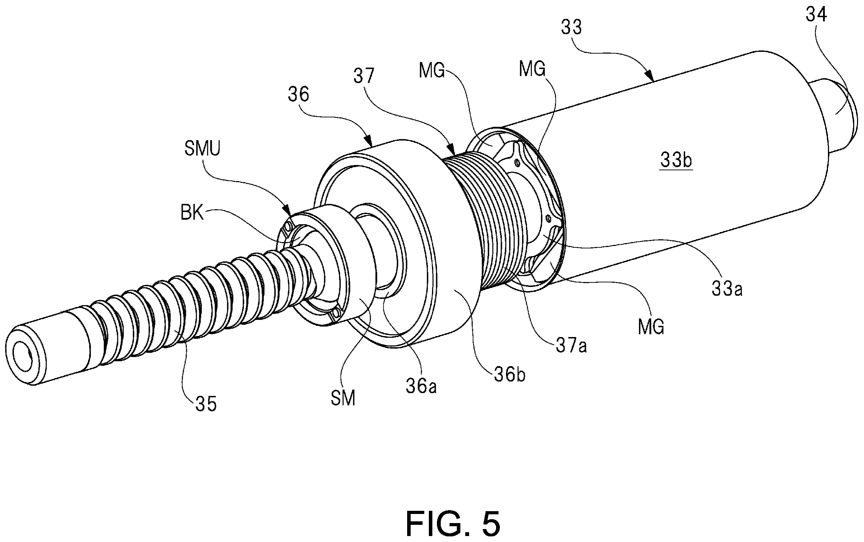

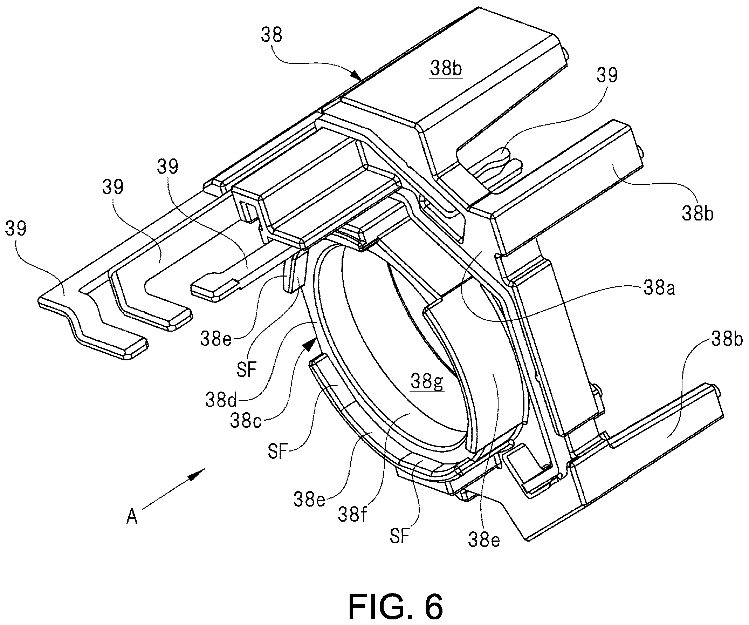

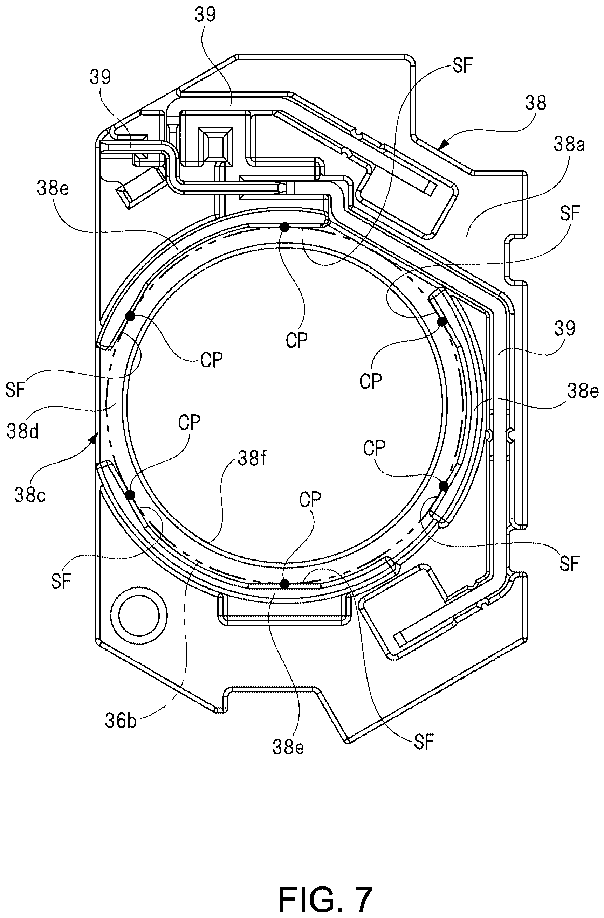

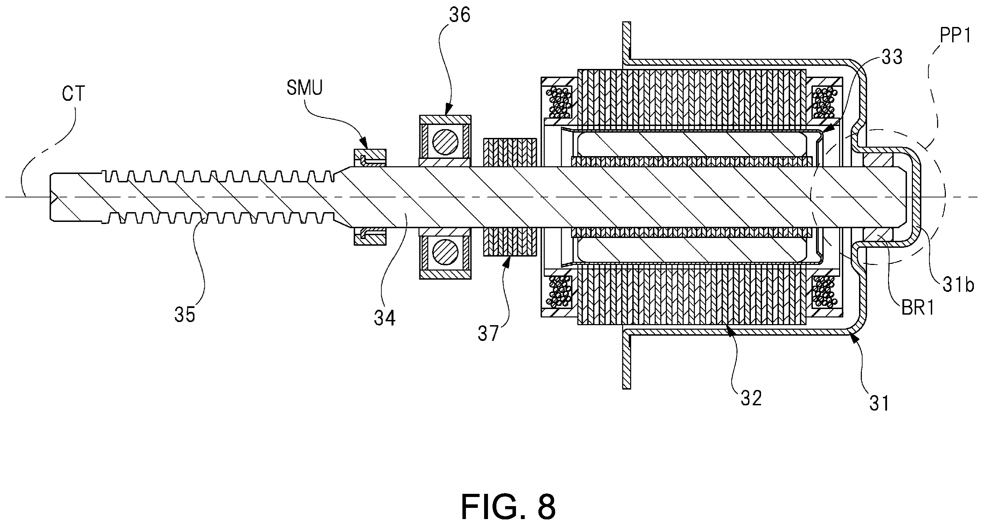

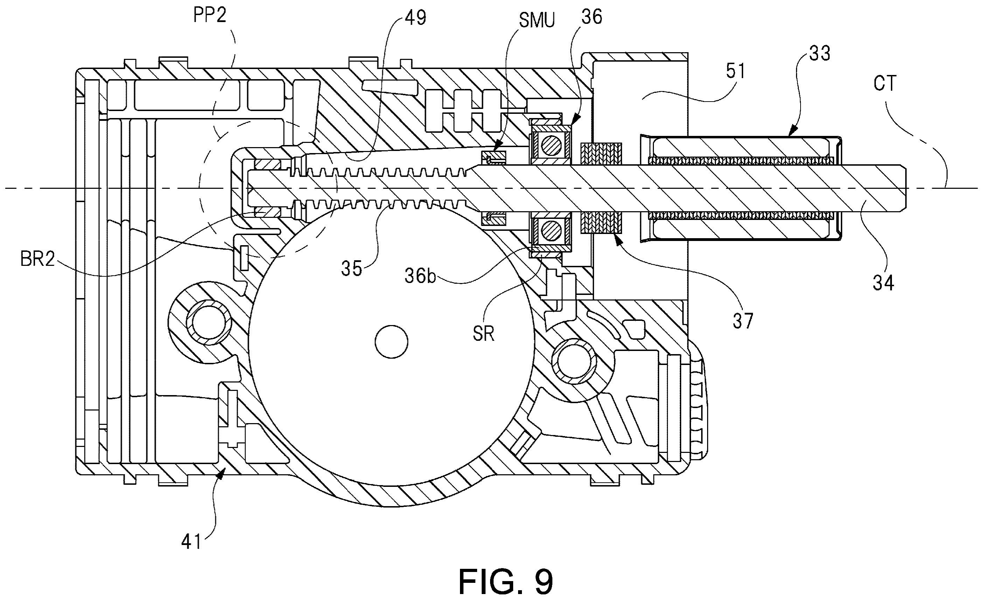

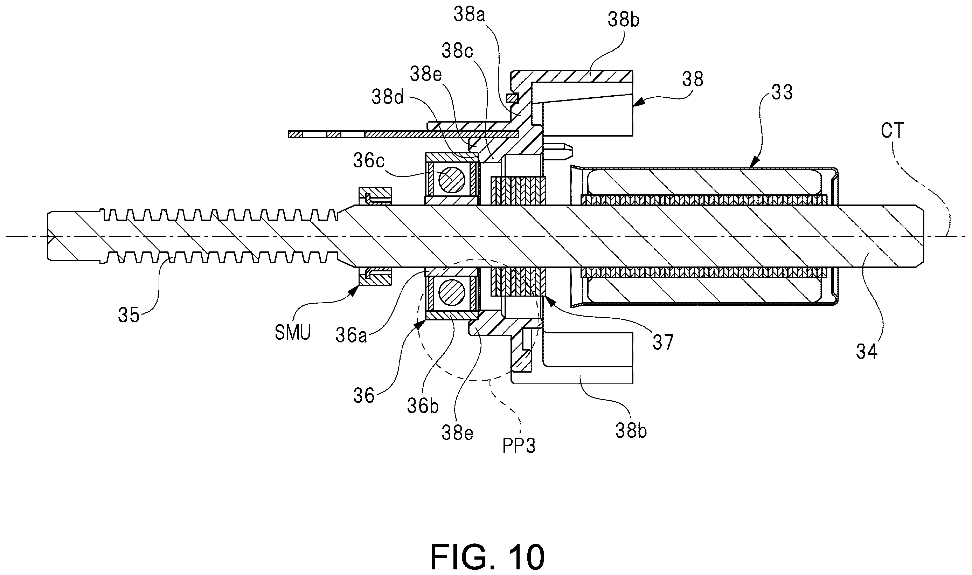

FIG. 1 is a schematic view showing a sunroof device disposed on a roof of a vehicle. FIG. 2 is a perspective view showing an output gear side of a sunroof motor. FIG. 3 is a perspective view showing a cover member side of the sunroof motor. FIG. 4 is a cross-sectional view showing the sunroof motor along an axial direction of a rotation shaft. FIG. 5 is a perspective view showing a rotor as seen from a worm side. FIG. 6 is a perspective view of the holder member as seen from the side of a deceleration mechanism part. FIG. 7 is an arrow sign view of FIG. 6. FIG. 8 is a cross-sectional view illustrating a first positioning part. FIG. 9 is a cross-sectional view illustrating a second positioning part. FIG. 10 is a cross-sectional view illustrating a third positioning part.

### <Overview of the sunroof device>

As shown in FIG. 1, a sunroof device 10 includes a roof panel 11. The roof panel 11 opens and closes an opening part 14 formed in a roof 13 of a vehicle 12. A pair of shoes 15a, 15b are fixed to both sides (upper and lower sides in FIG. 1) of the roof panel 11 in the vehicle width direction.

Also, guide rails 16 extending in the front-rear direction (left-right direction in FIG. 1) of the vehicle 12 are respectively fixed to both sides of the opening part 14 in the vehicle width direction in the roof 13. The roof panel 11 moves in the front-rear direction of the vehicle 12 as the pair of shoes 15a, 15b are guided by the corresponding pair of guide rails 16.

One end of each of drive cables 17a, 17b with gears is connected to each of the shoes 15b located on the rear side (right side in FIG. 1) of the vehicle 12. The other end of the drive cables 17a, 17b is routed to the front side (left side in FIG. 1) of the vehicle 12 with respect to the opening part 14.

The sunroof motor 20 is provided inside the roof 13 on the front side of the vehicle 12 with respect to the opening part 14, and between the opening part 14 and a front glass FG. The other end of the pair of drive cables 17a, 17b is meshed with an output gear 47a provided in the sunroof motor 20.

As a result, when the sunroof motor 20 is driven, the pair of drive cables 17a, 17b move in the longitudinal direction thereof in directions opposite to each other. Consequently, the roof panel 11 is pushed and pulled by the pair of drive cables 17a, 17b through the pair of shoes 15b, thereby opening and closing the opening part 14.

The sunroof motor 20 corresponds to a motor device in the invention.

### <Sunroof motor>

As shown in FIG. 2 to FIG. 4, the sunroof motor 20 includes an electric motor part 30 and a deceleration mechanism part 40. The electric motor part 30 and the deceleration mechanism part 40 are fixed to each other by a total of three fixing screws SC.

### <Electric motor part>

The electric motor part 30 adopts a brushless motor and has a motor case 31 formed in a bottomed cylindrical shape by deep drawing, etc., on a steel plate (magnetic body), etc. The motor case 31 forms an outer frame of the electric motor part 30 and includes a sidewall part 31a formed in a substantially regular hexagonal cross-section. Additionally, one side of the sidewall part 31a in the axial direction (the right side in FIG. 2 to FIG. 4) is closed by a stepped bottom wall part 31b.

### <Stator>

As shown in FIG. 4, a stator 32 is accommodated inside the motor case 31. The stator 32 has a stator core 32a formed by laminating multiple thin steel plates (magnetic body). The stator core 32a is fixed inside the motor case 31 and includes a total of six teeth 32b (not shown in detail). On the teeth 32b, three-phase coils CL consisting of U-phase, V-phase, and W-phase are wound respectively via an insulator (insulating member) 32c.

The motor case 31 corresponds to a first case in the invention.

### <Rotor>

As shown in FIG. 4 and FIG. 5, a rotor 33 is rotatably provided on the radial inner side of the stator 32 via a predetermined air gap AG. The rotor 33 is configured to rotate relative to the stator 32 and has a rotor core 33a formed in a substantially cylindrical shape. The rotor core 33a is formed by laminating multiple thin steel plates (magnetic body), and a total of four magnets MG are fixed to the radial outer side of the rotor core 33a by using an adhesive, etc. Specifically, each magnet MG is disposed at equal intervals (an interval of 90°) in the peripheral direction of the rotor core 33a.

Additionally, the radial outer side of each magnet MG fixed to the rotor core 33a is covered by a magnet holder 33b formed in a substantially cylindrical shape by using a thin stainless steel plate, etc. The magnet holder 33b prevents the magnets MG from falling off from the rotor core 33a. As a result, even when the rotor 33 rotates at a high speed, the magnets MG do not detach from the rotor core 33a due to centrifugal force at this time.

### <Rotation shaft>

The rotor core 33a is fixed to a rotation shaft 34. Specifically, the rotation shaft 34 is fixed to the rotation center of the rotor core 33a by press-fitting. In this way, the rotation shaft 34 is provided at the rotor 33. The rotation shaft 34 is made of a round steel bar to ensure sufficient strength.

In addition, the base end side of the rotation shaft 34 (right side in FIG. 4) in the axial direction is accommodated inside the motor case 31 and is rotatably supported by a first metal (radial bearing) BR1 provided at the bottom wall part 31b of the motor case 31. On the other hand, the tip side (left side in FIG. 4) of the rotation shaft 34 in the axial direction is accommodated inside a housing 41 forming the deceleration mechanism part 40, and is rotatably supported by a second metal (radial bearing) BR2 provided at a worm accommodation part 49 of the housing 41.

That is, the rotation shaft 34 is rotatably accommodated inside the motor case 31 and the housing 41. The first metal BR1 corresponds to a first bearing in the invention, and the second metal BR2 corresponds to a second bearing in the invention.

Furthermore, a worm 35 forming a deceleration mechanism SD is integrally provided on the tip side of the rotation shaft 34 in the axial direction. That is, the worm 35 is also made of a round steel bar. Accordingly, the rigidity of the worm 35 is increased to prevent the worm 35 from bending and consequently ensure reliable meshing with a worm wheel 46.

### <Ball bearing>

Furthermore, a ball bearing 36 is mounted on the central part of the rotation shaft 34 in the axial direction. That is, the ball bearing 36 is provided between the first metal BR1 and the second metal BR2 in the axial direction of the rotation shaft 34, and rotatably supports the axial central portion of the rotation shaft 34. In the axial direction of the rotation shaft 34, the rotor core 33a to which the magnet MG is fixed and the ball bearing 36 are disposed in side-by-side, and the rotor core 33a to which the magnet MG is fixed is positioned between the ball bearing 36 and the first metal BR1.

The ball bearing 36 corresponds to a third bearing in the invention.

Similar to the first metal BR2 and the second metal BR2, the ball bearing 36 rotatably supports the rotation shaft 34, and includes an inner race (inner wheel) 36a formed in a substantially cylindrical shape by using a steel material, and an outer race (outer wheel) 36b formed in a substantially cylindrical shape by using a steel material, like the inner race 36a but with a diameter larger than the inner race 36a. Also, multiple balls (steel balls) 36c are provided between the inner race 36a and the outer race 36b.

Here, the inner race 36a is fixed to the rotation shaft 34 by press-fitting. That is, the inner race 36a rotates together with the rotation shaft 34. Also, as shown in FIG. 4, an outer diameter dimension D1 of the worm 35 is smaller than an outer diameter dimension D2 of the rotation shaft 34 (D1<D2). This allows the ball bearing 36 to be press-fitted onto the rotation shaft 34 from the side of the worm 35 in the axial direction of the rotation shaft 34.

### <Sensor magnet unit>

Also, in the axial direction of the rotation shaft 34, a sensor magnet unit SMU is provided between the worm 35 and the ball bearing 36. The sensor magnet unit SMU has a cylindrical bracket member BK fixed to the rotation shaft 34 by press-fitting, and a sensor magnet SM held by the bracket member BK. Here, the sensor magnet SM is used to detect the rotation state of the rotation shaft 34 (rotor 33), specifically the rotation direction, rotation speed, etc.

The sensor magnet unit SMU also rotates together with the rotation shaft 34, similar to the inner race 36a of the ball bearing 36. Also, the sensor magnet unit SMU can be press-fitted onto the rotation shaft 34 from the side of the worm 35 in the axial direction of the rotation shaft 34.

### <Adjustment member>

Furthermore, in the axial direction of the rotation shaft 34, an adjustment member 37 used to adjust the rotational balance of the rotor 33 is provided between the ball bearing 36 and the rotor core 33a (magnet MG). The adjustment member 37 is formed in a substantially cylindrical shape by laminating multiple thin steel plates (magnetic bodies) 37a, and is fixed to the rotation shaft 34 by press-fitting.

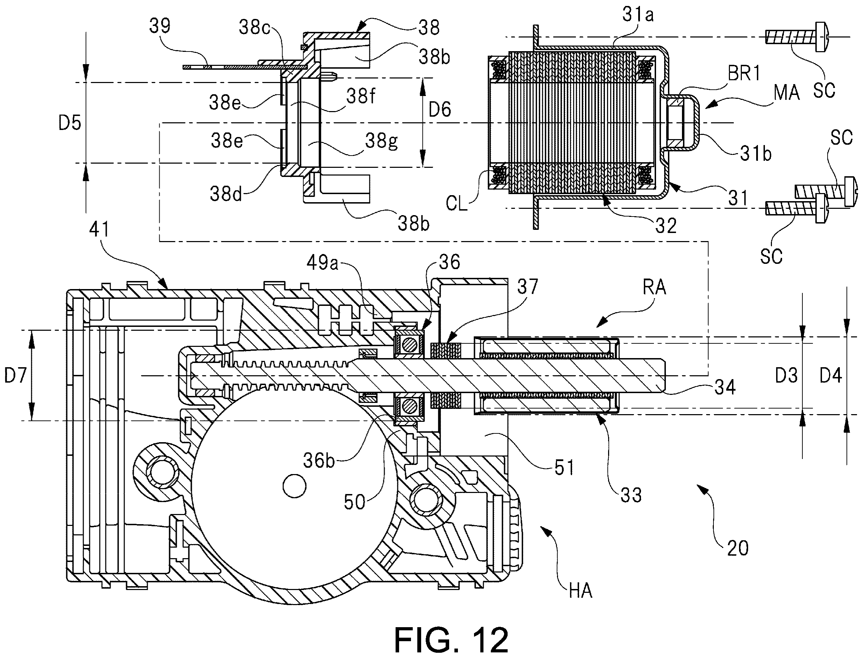

Also, an outer diameter dimension D3 (see FIG. 12) of the adjustment member 37 is equal to or less than an outer diameter dimension D4 (see FIG. 12) of the rotor 33 (D3<D4). Here, the outer diameter dimension D4 of the rotor 33 corresponds to a portion of the magnet holder 33b having the largest in the radial direction.

The adjustment member 37 is positioned between the ball bearing 36 and the rotor core 33a in the axial direction of the rotation shaft 34, and is located closer to the ball bearing 36 than the magnet MG. As a result, as shown in FIG. 4, a relatively long first gap G1 is formed between the magnet MG and the adjustment member 37 in the axial direction of the rotation shaft 34.

Here, a relatively short second gap G2 is formed between the magnet MG and the stator 32 in the radial direction of the rotation shaft 34. When a comparison target for comparison with a separation distance L1 between the magnet MG and the adjustment member 37 in the axial direction of the rotation shaft 34 is set as a separation distance L2 between the magnet MG and the stator 32 in the radial direction of the rotation shaft 34, the separation distance L1 is longer than the separation distance L2 (L1>L2). Specifically, the separation distance L1 is "approximately 7 times" the separation distance L2 (L1□L2×7).

In this way, by positioning the adjustment member 37 at a distance from the magnet MG, farther than the stator 32, the magnetic flux (not shown) from the total of four magnets MG is suppressed from flowing toward the adjustment member 37. In other words, the magnetic flux from each magnet MG is efficiently directed toward the stator 32. Therefore, even though the adjustment member 37 made of magnetic body is provided between the ball bearing 36 and the magnet MG, the reduction in output torque of the sunroof motor 20 is suppressed.

The adjustment member 37 has the function of suppressing the rotation wobbling of the rotor 33 caused by minute warping of the rotation shaft 34 that varies from product to product, and minute position misalignment between the rotation center of the rotation shaft 34 and the rotation center of the rotor core 33a. Specifically, during the assembly of the rotor 33, the rotational balance of the rotor 33 is optimized (rotation wobbling suppression) by partially cutting the outer periphery of the adjustment member 37 while rotating the rotor 33.

Accordingly, it is possible to reduce the operation sound of the sunroof motor 20 (improved quietness). In particular, since the sunroof motor 20 is positioned above the heads of the driver and passengers, loud operation sounds may be unpleasant to the ear. Therefore, it is necessary to further improve the quietness of the sunroof motor 20.

### <Holder Member>

Furthermore, the electric motor part 30 includes a holder member 38, as shown in FIG. 4, FIG. 6, and FIG. 7. The holder member 38 is formed in a predetermined shape by using a resin material such as plastic. The holder member 38 includes a support body 38a formed in a substantially flat plate shape, and multiple wall parts 38b that extend into the housing 41. That is, the holder member 38 is a component mounted to the housing 41.

An annular support part 38c is integrally provided on the support body 38a of the holder member 38. The annular support part 38c includes an annular flat surface 38d directed toward the tip side (the left side in FIG. 4) of the rotation shaft 34 in the axial direction, and the annular flat surface 38d contacts the outer race 36b of the ball bearing 36 from one side in the axial direction (the right side in FIG. 4). That is, the annular support part 38c supports the entire periphery of one side of the outer race 36b in the axial direction. The other side (the left side in FIG. 4) of the outer race 36b in the axial direction is supported by a bearing mounting part 50 provided in the housing 41.

In this way, the outer race 36b of the ball bearing 36 is sandwiched between the housing 41 and the holder member 38 in the axial direction of the rotation shaft 34. Here, the holder member 38 is fixed without rattling inside the housing 41 by fixing the motor case 31 to the housing 41 with a total of three fixing screws SC. That is, the holder member 38 is sandwiched between the motor case 31 and the outer race 36b in the axial direction of the rotor 33.

In addition, a total of three positioning protrusions 38e are integrally provided on the annular support part 38c. The positioning protrusions 38e extend in the peripheral direction of the annular support part 38c and are formed in a substantially arc shape. In addition, the positioning protrusions 38e are disposed at equal intervals (120-degree intervals) in the peripheral direction of the annular support part 38c. Furthermore, each of the positioning protrusions 38e protrudes from the annular support part 38c toward the other side (the left side in FIG. 4) in the axial direction. The outer race 36b of the ball bearing 36 is fit with the inner side of the total of three positioning protrusions 38e.

Specifically, as shown in FIG. 7, a pair of flat surfaces SF in point contact with the outer peripheral part of the outer race 36b are provided on the radial inner side of each of the positioning protrusions 38e. That is, a total of six flat surfaces SF are provided on the holder member 38. In addition, the outer peripheral part of the outer race 36b are in point contact with the flat surfaces SF at a total of six contact points CP.

The total of six contact points CP are disposed at equal intervals (60-degree intervals) in the peripheral direction of the annular support part 38c. Accordingly, it is possible for the axis of the ball bearing 36 and the axis of the annular support part 38c to be accurately aligned (centered) during assembling of the sunroof motor 20.

In this way, the holder member 38 is positioned at the ball bearing 36 and supports the holder bearing 36 from one side in the axial direction. In other words, the ball bearing 36 has a function of positioning the holder member 38 in the proper position via the total of three positioning protrusions 38e.

Furthermore, on the radial inner side of the annular support part 38c, a small-diameter through hole 38f and a large-diameter through hole 38g which penetrate in the axial direction of the annular support part 38c and through which the rotation shaft 34 is inserted are provided. Here, an inner diameter dimension D5 of the small-diameter through hole 38f is smaller than an inner diameter dimension D6 of the large-diameter through hole 38g (D5<D6).

The small-diameter through hole 38f corresponds to a through hole in the invention.

Here, on the radial inner sides of the small-diameter through hole 38f and the large-diameter through hole 38g, as shown in FIG. 4, the adjustment member 37 is disposed. Since the annular support part 38c is sized to be able to support the outer race 36b of the ball bearing 36 from one side in the axial direction, a relatively large dead space DS is formed on the radial inner sides of the small-diameter through hole 38f and the large-diameter through hole 38g.

By effectively utilizing the dead space DS, the adjustment member 37 is disposed in the dead space DS. Therefore, by providing the adjustment member 37 on the rotation shaft 34, the size of the housing 41 or the entire sunroof motor 20 does not increase.

In addition, multiple conductive members 39 (see FIGs. 6 and 7) are mounted to the support body 38a in correspondence with the three-phase coils CL (see FIG. 4). Specifically, the total of three conductive members 39 are provided in correspondence with the U-phase, the V-phase, and the W-phase. That is, the holder member 38 holds the total of three conductive members 39. The total of three conductive members 39 mounted to the holder member 38 are formed in a substantially rod shape by using brass, etc., with excellent conductivity, and extend in the axial direction of the rotor 33.

In addition, one side (right side of FIG. 6) of the total of three conductive members 39 in the longitudinal direction is respectively electrically connected to the three-phase coils CL (see FIGs. 4 and 12) provided at the stator 32. Comparatively, the other side (the left side in FIG. 6) of the total of three conductive members 39 in the longitudinal direction is supported by a conductive member support part 49a (see FIGs. 4 and 12) provided at the housing 41. Here, the other side of the conductive members 39 in the longitudinal direction is electrically connected to connection terminals (not shown) of an external connector provided on the side of the vehicle 12 (see FIG. 1).

Accordingly, the driving current is supplied from an in-vehicle controller, etc., to the three-phase coils CL of the sunroof motor 20, thus rotating the rotation shaft 34 in the forward or reverse direction. In this way, the holder member 38 supports the outer race 36b of the ball bearing 36 and holds the total of three conductive members 39.

### <Deceleration mechanism part>

As shown in FIG. 2 to FIG. 4, the deceleration mechanism part 40 includes the housing 41 that accommodates the deceleration mechanism SD. The housing 41 is formed in a substantially flat rectangular parallelepiped shape by using a resin material such as plastic, and abuts against the motor case 31 in the axial direction of the rotor. Specifically, the housing 41 has a first wall part 42, a second wall part 43, and a third wall part 44. Among the first wall part 42, the second wall part 43, and the third wall part 44, the first wall part 42 occupies the largest proportion.

The housing 41 corresponds to a second case in the invention.

As shown in FIG. 4, a worm wheel accommodation part 45 is provided on the inner side the housing 41. The worm wheel accommodation part 45 is disposed in a portion close to the third wall part 44. Inside the worm wheel accommodation part 45, a worm wheel 46 forming the deceleration mechanism SD is rotatably accommodated. Here, the worm wheel 46 is made of a resin material such as plastic, achieving weight reduction. The worm wheel 46 is provided with a tooth part 46a, and the tooth part 46a is meshed with the worm 35 inside the housing 41.

In other words, the deceleration mechanism SD is a worm decelerator that provides a relatively large deceleration ratio. Specifically, in the embodiment, the deceleration ratio of the deceleration mechanism SD is [1:67]. That is, the deceleration ratio is such that when the worm 35 rotates 67 times, the worm wheel 46 finally completes one rotation. Of course, it is also possible to set other deceleration ratios.

In addition, the axial base end side of an output shaft 47 made of a round steel bar is fixed to the rotation center of the worm wheel 46. Comparatively, the output gear 47a (see FIG. 2) meshed with the pair of drive cables 17a, 17b (see FIG. 1) is integrally provided at the axial tip side of the output shaft 47.

Therefore, the high-speed rotation of the rotation shaft 34 is decelerated by the deceleration mechanism SD, and the rotation force that has been decelerated and converted to high torque is transmitted to the pair of drive cables 17a, 17b via the output shaft 47 and the output gear 47a. The deceleration mechanism SD is formed by the worm 35 and the worm wheel 46.

Here, the worm wheel accommodation part 45 has an opening on the side opposite to the side of the first wall part 42 (not shown). As shown in FIG. 3, the opening portion of the worm wheel accommodation part 45 is closed by a cover member 48 formed in a substantially disc shape by press-working or other processing of a steel plate.

As shown in FIG. 4, a worm accommodation part 49 is provided on the inner side the housing 41. The worm accommodation part 49 is disposed in a portion close to the second wall part 43. The worm accommodation part 49 is disposed in the vicinity of the worm wheel accommodation part 45, and the interiors of the accommodation parts 49, 45 are in communication with each other. Accordingly, it is possible for the worm 35 and the tooth part 46a to mesh with each other.

The worm accommodation part 49 extends in the axial direction of the rotation shaft 34, and the second metal BR2 that rotatably supports the tip side of the rotation shaft 34 in the axial direction is accommodated on the other side (left side of FIG. 4) of the worm accommodation part 49 in the axial direction.

In addition, the conductive member support part 49a is provided between the worm accommodation part 49 and the second wall part 43. The conductive member support part 49a includes a function of supporting, without rattling, the other side (left side in FIG. 4) of the total of three conductive members 39 in the longitudinal direction that is held by the holder 38. Accordingly, the connection terminals (not shown) of the external connector provided on the side of the vehicle 12 (see FIG. 1) are electrically connectible to the respective conductive members 39 in a stable state.

In addition, the bearing mounting part 50 is provided on the inner side of the housing 41. The bearing mounting part 50 is disposed on one side (the right side in FIG. 4) of the worm accommodation part 49 in the axial direction and opens toward the motor case 31. Inside the bearing mounting part 50, the ball bearing 36 is accommodated, and the entire periphery of the other side (the left side in FIG. 4) of the outer race 36b in the axial direction is supported by the bearing mounting part 50.

A support ring SR formed in a substantially cylindrical shape is fixed by being press-fit to the bearing mounting part 50. The support ring SR is formed, for example, of a sintered material made by compressing metal powder. The outer race 36b is disposed on the radial inner side of the support ring SR with a minute gap (not shown) in between. Here, an outer diameter dimension D7 (see FIG. 12) of the ball bearing 36 is larger than the inner diameter dimension D5 (see FIG. 12) of the small-diameter through diameter hole 38f in the annular support part 38c (D7>D5).

As shown in FIG. 4, the rotation shaft 34 is supported at three points by the first metal BR1, the second metal BR2, and the ball bearing 36. Accordingly, the worm 35 is suppressed from separating from the tooth part 46a of the worm wheel 46 (disengagement of meshing) during the operation of the sunroof motor 20, ensuring reliable power transmission between them.

The inner race 36a is fixed to the rotation shaft 34, and the outer race 36b is sandwiched between the bearing mounting part 50 and the holder member 38. Therefore, the rotation shaft 34 does not move in the axial direction thereof. Consequently, there is no need to provide thrust bearings on both sides of the rotation shaft 34 in the axial direction, thereby reducing the number of parts.

On the other hand, to smoothly rotate the rotation shaft 34 with three-point support, it is necessary to improve the accuracy of the parts forming the sunroof motor 20. However, such improvement in part accuracy is unrealistic as it would lead to complication in the manufacturing process and increased product cost. Therefore, in the embodiment, the ball bearing 36 (outer race 36b) is disposed on the radial inner side of the support ring SR with a minute gap in between.

Accordingly, the minute gap absorbs manufacturing errors of parts and differences in linear expansion between parts. Therefore, smooth rotation of the rotation shaft 34 is ensured. In this way, the minute gap between the support ring SR and the outer race 36b has a function of absorbing manufacturing errors of parts forming the sunroof motor 20 and differences in linear expansion between parts.

### <Motor accommodation part>

Also, as shown in FIG. 4, FIG. 9, FIG. 11, and FIG. 12, a motor accommodation part 51 formed in a substantially box shape is provided on the inner side of the housing 41. The motor accommodation part 51 is disposed on the side of the motor case 31 (right side in FIG. 4) of the bearing mounting part 50 in the axial direction of the rotation shaft 34.

A portion of the electric motor part 30 is accommodated in the motor accommodation part 51. Specifically, as shown in FIG. 4, the wall part 38b of the holder member 38 forming the electric motor part 30 extends into the motor accommodation part 51.

### <Metal jacket>

Here, as shown in FIG. 2 and FIG. 3, a metal jacket 60 formed by bending a thin steel plate is partially mounted on the outer side of the housing 41. The metal jacket 60 has a function of preventing electrical noise generated inside the housing 41 from radiating to the outside of the housing 41. Accordingly, electrical noise is prevented from reaching car audio equipment, etc., (not shown) mounted in the vehicle 12 (see FIG. 1), thereby preventing the radio noise, etc., from being generated.

### <Positioning Structure>

As shown in FIGs. 8 to 10, in the sunroof motor 20, the motor case 31, the housing 41, and the holder member 38 are respectively positioned with reference to the single shaft shaft 34 (axis CT) forming the rotor 33. Accordingly, in the assembled sunroof motor 20, the rotation shaft 34 is able to rotate smoothly without rattling in each product. Specifically, with the positioning structure at three positions in the following, the number of parts is reduced, and the assembly can be made easier.

### <First Positioning Part>

As shown in FIG. 8, by using a first positioning part PP1, the motor case 31 (stator 32) is positioned with respect to the rotation shaft 34. Specifically, the first metal BR1 is mounted to the bottom wall part 31b of the motor case 31, and the rotation shaft 34 is rotatably supported by the first metal BR1. That is, the first positioning part PP1 is formed by the bottom wall part 31b, the first metal BR1, and the rotation shaft 34.

Accordingly, the motor case 31 and the stator 32 are accurately positioned to correct positions with reference to the rotation shaft 34 (axis CT) through the first metal BR1.

### <Second Positioning Part>

As shown in FIG. 9, by using a second positioning part PP2, the housing 41 is positioned with respect to the rotation shaft 34. Specifically, the second metal BR2 is mounted to the worm accommodation part 49 of the housing 41, and the rotation shaft 34 is rotatably supported by the second metal BR2. That is, the second positioning part PP2 is formed by the worm accommodation part 49, the second metal BR2, and the rotation shaft 34 (the side of the worm 35).

Accordingly, the housing 41 is accurately positioned to a correct position with reference to the rotation shaft 34 (axis CT) through the second metal BR2.

Between the outer race 36b of the ball bearing 36 and the support ring SR, a minute gap (not shown) that absorbs manufacturing errors of the parts and absorbs linear expansion differences between the parts is present. Accordingly, the ball bearing 36 fixed to the rotation shaft 34 does not contribute to the housing 41.

### <Third Positioning Part>

As shown in FIG. 10, by using a third positioning part PP3, the holder member 38 is positioned with respect to the rotation shaft 34. Specifically, the inner race 36a of the ball bearing 36 is mounted to the rotation shaft 34, and the outer race 36b of the ball bearing 36 is fit to the total of three positioning protrusions 38e of the holder member 38. That is, the third positioning part PP3 is formed by the rotation shaft 34, the ball bearing 36, and the positioning protrusions 38e.

Accordingly, the holder member 38 is accurately positioned to a correct position with reference to the rotation shaft 34 (axis CT) through the ball bearing 36.

The ball bearing 36 has the inner race 36a, the outer race 36b, and multiple balls 36c, and is a precision component with no backlash between the respective components. Accordingly, the holder member 38 is accurately positioned to the rotation shaft 34 through the ball bearing 36.

In this way, in the sunroof motor 20 of the embodiment, the motor case 31, the stator 32, the housing 41, and the holder member 38 are accurately positioned with reference to the rotation shaft 34 by using the positioning parts PP1, PP2, PP3 at three positions. That is, by positioning other components with reference to the rotation shaft 34 (axis CT), the assembling accuracy of the sunroof motor 20 is improved, and thus variation is suppressed from being generated in the rotational resistance of the rotation shaft 34 for each product.

### <Assembly procedure of sunroof motor>

Next, the assembly procedure of the sunroof motor 20 will be described in detail using the drawings.

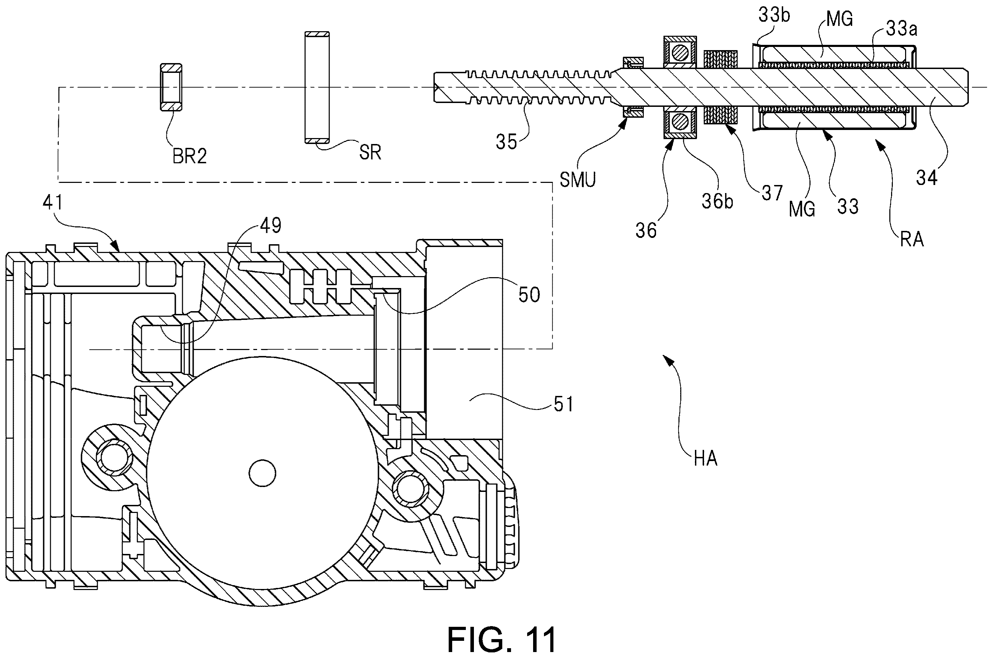

FIG. 11 is a view describing an assembly procedure (1) of the sunroof motor. FIG. 12 is a view describing an assembly procedure (2) of the sunroof motor.

Here, as shown in FIG. 12, the size relationship among the outer diameter dimension D3 of the adjustment member 37, the outer diameter dimension D4 of the rotor 33, the inner diameter dimension D5 of the small-diameter through hole 38f, the inner diameter dimension D6 of the large-diameter through hole 38g, and the outer diameter dimension D7 of the ball bearing 36 is as follows: D6□D7>D5>D4>D3.

As a result, it is possible to insert the rotor 33 and the adjustment member 37 through the radial inner side of the annular support part 38c, and to make the annular flat surface 38d contact the entire periphery of one side of the outer race 36b in the axial direction. Therefore, as shown in FIG. 11 and FIG. 12, the sunroof motor 20 can be easily assembled.

### <Assembly procedure (1)>

As shown in FIG. 11, first, the housing 41, the second metal BR2, the support ring SR, and a rotor assembly RA are prepared. Here, the rotor assembly RA is a rotor assembly in which the rotor 33, the ball bearing 36, the sensor magnet unit SMU, and the adjustment member 34 are mounted to the rotation shaft 34.

Then, along the dot-chain line, first, the second metal BR2 is fixed to the worm accommodation part 49. Next, the support ring SR is fixed to the bearing mounting part 50. After that, the side of the worm 35 of the rotor assembly RA in the axial direction faces toward the motor accommodation part 51. Then, the worm 35 of the rotor assembly RA is accommodated in the worm accommodation part 49, and the ball bearing 36 is mounted to the bearing mounting part 50.

At this time, the side of the worm 35 of the rotation shaft 34 is supported by the second metal BR2, and the outer race 36b is inserted into the support ring SR. Since a minute gap (not shown) is provided between the outer race 36b and the support ring SR, the mounting operation of the rotor assembly RA into the housing 41 can be easily performed.

Accordingly, the mounting operation of the rotor assembly RA to the housing 41 is completed, and the housing 41 is positioned on the rotation shaft 34 via the second metal BR2 (see FIG. 9). The housing 41 with the rotor assembly RA assembled through <Assembly Procedure (1)> is referred to as a housing assembly HA.

### <Assembly procedure (2)>

Next, as shown in FIG. 12, the housing assembly HA, the holder member 38, the motor assembly MA, and the total of three fixing screws SC are prepared. The total of three conductive members 39 are mounted to the holder member 38. The motor assembly MA refers to the assembly where the first metal BR1 is mounted to the bottom wall part 31b of the motor case 31, and the stator 32 is fixed to the sidewall part 31a of the motor case 31.

Then, along the dot-chain line, first, the side of the housing 41 of the holder member 38 faces toward the motor accommodation part 51. Then, the wall parts 38b provided on the holder member 38 are inserted into the motor accommodation part 51. At this time, the inner diameter dimension D5 of the small-diameter through hole 38f in the annular support part 38c is greater than the outer diameter dimension D3 of the adjustment member 37 and the outer diameter dimension D4 of the rotor 33 (D5>D4>D3). Therefore, the adjustment member 37 and the rotor 33 can be easily inserted through the radial inner side of the small-diameter through hole 38f.

Then, the other side of the total of three conductive members 39 (the left side of FIG. 12) mounted to the holder member 38 in the longitudinal direction are supported by the conductive member support part 49a, the outer race 36b is fit with the inner side of the total of three positioning protrusions 38e provided at the holder member 38.

At this time, since the inner diameter dimension D5 of the small-diameter through hole 38f is smaller than the outer diameter dimension D7 of the ball bearing 36 (D5<D7), the entire periphery of the annular flat surface 38d of the annular support part 38c contacts one side of the outer race 36b in the axial direction. Also, the adjustment member 37 is disposed in the dead space DS (see FIG. 4) formed on the radial inner side of the annular support part 38c.

In this way, the entire periphery of the other side (left side in FIG. 12) of the outer race 36b in the axial direction is supported by the bearing mounting part 50, and the entire periphery of one side (right side in FIG. 12) of the outer race 36b in the axial direction is supported by the annular flat surface 38d of the annular support part 38c. Therefore, the tilting of the ball bearing 36 (rotation shaft 34) is suppressed.

Next, the motor assembly MA faces toward the motor accommodation part 51. At this time, the side of the holder member 38 of the motor case 31 faces toward the motor accommodation part 51. Then, while inserting the rotor 33 into the radial inner side of the stator 32, the opening side of the motor case 31 abuts against the housing 41. At this time, the base end side of the rotation shaft 34 in the axial direction is supported by the first metal BR1.

At this time, the holder member 38 is positioned by the outer race 36b (see FIG. 10), and the motor assembly MA is positioned by the rotation shaft 34 (see FIG. 8). Also, the ball bearing 36 and the rotation shaft 34 are accurately disposed on the same axis with each other.

Therefore, the holder member 38 and the motor assembly MA are also accurately disposed on the same axis with each other. Accordingly, the total of three conductive members 39 and the three-phase coils CL can be easily and accurately positioned, and these can be easily electrically connected to each other (improved assembly workability).

After that, by using a fastening tool such as a Phillips screwdriver (not shown), a total of three fixing screws SC are screwed into the housing 41. Accordingly, the motor case 31 and the housing 41 are firmly fixed to each other. In this way, after the rotor assembly RA is assembled to the housing 41, the holder member 38 and the motor assembly MA are assembled to the housing assembly HA, and the fixing operation of the holder member 38 and the motor assembly MA to the housing assembly HA is completed.

After <Assembly procedure (2)>, the worm wheel 46 (see FIG. 4) is accommodated in the worm wheel accommodation part 45 of the housing 41, and the opening portion of the worm wheel accommodation part 45 is closed with the cover member 48 (see FIG. 3). Accordingly, the assembly operation of the sunroof motor 20 is completed.

As described above, according to the embodiment, the motor device includes: the motor case 31, in which the stator 32 is fixed inside; the housing 41, abutting against the motor case 31 the an axial direction of the rotor 33; the rotation shaft 34, provided at the rotor 33 and rotatably accommodated inside the motor case 31 and the housing 41; the first metal BR1, provided at the motor case 31 and rotatably supporting the base end side of the rotation shaft 34 in the axial direction; the second metal BR2, provided at the housing 41 and rotatably supporting the tip side of the rotation shaft 34 in the axial direction; the ball bearing 36, provided between the first metal BR1 and the second metal BR2 in the axial direction of the rotation shaft 34 and rotatably supporting the rotation shaft 34; and the holder member 36, positioned by the ball bearing 36 and holding the conductive members 39. The holder member 38 is sandwiched between the motor case 31 and the ball bearing 36 in the axial direction of the rotor 33.

Accordingly, with reference to one single rotation shaft 34 (axis CT), the motor case 31, the stator 32, the housing 41, and the holder 38 can be accurately positioned. Therefore, the number of parts can be reduced from the conventional art, and the sunroof motor 20 able to be assembled easily can be realized.

In addition, according to the embodiment, the conductive members 39 extend in the axial direction of the rotor 33, one side of the conductive members 39 in the longitudinal direction is connected to the three-phase coil CL provided at the stator 32, and the other side of the conductive members 39 in the longitudinal direction is supported by the conductive member support part 49a provided at the housing 41.

Since the components of the sunroof motor 20 are positioned with reference to the rotation shaft 34, by simply assembling the sunroof motor 20, one side of the conductive members 39 in the longitudinal direction can be easily connected with the coils CL, and the other side of the conductive members 39 in the longitudinal direction is supported by the conductive member support part 49a (improved assembling properties).

In addition, according to the embodiment, the small-diameter through hole 38f is provided at the holder member 38, and the rotation shaft 34 is inserted through the small-diameter through hole 38f. The inner diameter dimension D5 (see FIG. 12) of the small-diameter through hole 38f is smaller (D5<D7) than the outer diameter dimension D7 (see FIG. 12) of the ball bearing 36 and greater (D5>D4) than the outer diameter dimension D4 (see FIG. 12) of the rotor 33.

Accordingly, at the time of assembling the sunroof motor 20, the rotor 33 can be easily inserted through the small-diameter through hole 38f of the holder member 38. In addition, it is possible to support the outer race 36b by using the entire periphery of the annular flat surface 38d.

In addition, according to the embodiment, the adjustment member 37 for adjusting the rotation balance of the rotor 33 is provided between the ball bearing 36 and the rotor 33 in the axial direction of the rotation shaft 34, and the outer diameter dimension D3 (see FIG. 12) of the adjustment member 37 is equal to or less than (D3<D4) the outer diameter D4 (see FIG. 12) of the rotor 33.

Accordingly, at the time of assembling the sunroof motor 20, the rotor 33 and the adjustment member 37 can be easily inserted through the small-diameter through hole 38f of the holder member 38. In this way as well, the assembly properties of the sunroof motor 20 can be improved.

In addition, according to the embodiment, the number of parts can be reduced from the conventional art, and the assembly can be achieved easily. Therefore, the manufacture energy can be reduced. Thus, it is possible to realize particularly Goal 7 (Ensure access to affordable, reliable, sustainable and modern energy for all) and Goal 13 (Take urgent action to combat climate change and its impacts) of the Sustainable Development Goals (SDGs) established by the United Nations.

It goes without saying that the invention is not limited to the above embodiment and can be variously modified within a range that does not deviate from its essence. In the embodiments, the invention is shown applied to the sunroof motor 20 used in the sunroof device 10 of the vehicle 12, but the invention is not limited to this and can also be applied to, for example, in-vehicle motors (motor devices) used in slide door devices, power window devices, wiper devices, etc., mounted on vehicles.

Additionally, the material, shape, dimension, number, installation location, etc., of each component in the above embodiments can be arbitrary as long as the disclosure can be achieved, and are not limited to the embodiments.

### [Reference Signs List]

10: sunroof device, 11: roof panel, 12: vehicle, 13: roof, 14: opening part, 15a, 15b: shoe, 16: guide rail, 17a, 17b: drive cable, 20: sunroof motor (motor device), 30: electric motor part, 31: motor case (first case), 31a: sidewall part, 31b: bottom wall part, 32: stator, 32a: stator core, 32b: tooth, 32c: insulator (insulation member), 33: rotor, 33a: rotor core, 33b: magnet holder, 34: rotation shaft, 35: worm, 36: ball bearing (third bearing), 36a: inner race, 36b: outer race, 36c: ball, 37: adjustment member, 37a: steel plate, 38: holder member, 38a: support body, 38b: wall part, 38c: annular support part, 38d: annular flat surface, 38e: positioning protrusion, 38f: small-diameter through hole (insertion hole), 38g: large-diameter through hole, 39: conductive member, 40: deceleration mechanism part, 41: housing (second case), 42: first wall part, 43: second wall part, 44: third wall part, 45: worm wheel accommodation part, 46: worm wheel, 46a: tooth part, 47: output shaft, 47a: output gear, 48: cover member, 49: worm accommodation part, 49a: conductive member support part, 50: bearing mounting part, 51: motor accommodation part, 60: metal jacket, AG: air gap, BK: bracket member, BR1: first metal (first bearing), BR2: second metal (second bearing), CL: coil, CP contact point, CT: axis, DS: dead space, FG: front glass, G1: first gap, G2: second gap, HA: housing assembly, MA: motor assembly, MG: magnet, PP1: first positioning part, PP2: second positioning part, PP3: third positioning part, RA: rotor assembly, SC: fixing screw, SD: deceleration mechanism, SF: flat surface, SM: sensor magnet, SMU: sensor magnet unit, SR: support ring

## Claims

1. A motor device, having:
a stator; and
a rotor, rotating with respect to the stator, wherein the motor device comprises:
a first case, in which the stator is fixed inside;
a second case, abutting against the first case in an axial direction of the rotor;
a rotation shaft, provided at the rotor and rotatably accommodated inside the first case and the second case;
a first bearing, provided at the first case and rotatably supporting a base end side of the rotation shaft in an axial direction;
a second bearing, provided at the second case and rotatably supporting a tip side of the rotation shaft in the axial direction;
a third bearing, provided between the first bearing and the second bearing in the axial direction of the rotation shaft and rotatably supporting the rotation shaft; and
a holder member, positioned by the third bearing and holding a plurality of conductive members,
wherein the holder member is sandwiched between the first case and the third bearing in the axial direction of the rotor.

2. The motor device as claimed in claim 1,
wherein the conductive members extend in the axial direction of the rotor,
one side of the conductive members in an longitudinal direction is connected to a coil provided at the stator, and
an other side of the conductive members in the longitudinal direction is supported by a conductive member support part provided at the second case.

3. The motor device as claimed in claim 1,
wherein an insertion hole is provided at the holder member, the rotation shaft being inserted through the insertion hole, and
an inner diameter dimension of the insertion hole is smaller than an outer diameter of the third bearing and greater than an outer diameter dimension of the rotor.

4. The motor device as claimed in any one of claims 1 to 3,
wherein an adjustment member for adjusting rotation balance of the rotor is provided between the third bearing and the rotor in the axial direction of the rotation shaft, and
an outer diameter dimension of the adjustment member is equal to or less than an outer diameter of the rotor.
